# EUROPEAN PATENT APPLICATION

(11) **EP 1 717 989 A1**
(43) Date of publication of application: **02.11.2006**
(21) Application number: 06008381.3
(22) Date of filing: 24.04.2006
(51) Int. Cl.: H04L 12/18

(54) **System and method for enabling residential and mobile consumer collaboration**

(30) Priority: 26.04.2005 US 674924 P; 11.04.2006 US 279369
(71) Applicant: Alcatel, 75008 Paris (FR)
(72) Inventor: Petrack, Scott B., MA 02445 Brookline (US)
(74) Representative: Schäfer, Wolfgang

(57) **Abstract**

A system and method are described herein that can be used to establish a new type of conference (e.g., collaboration) between a leader and one or more participants. In one embodiment, the leader downloads media (e.g., digital photos) from a consumer appliance device (e.g., digital camera) into a network connected device (e.g., personal computer). Then, the leader uploads the media from the network connected device via the Internet (for example) into a television network. The television network then broadcasts the media to participants who can view/listen to the media on their televisions.

## Description

### CLAIMING BENEFIT OF PROVISIONAL APPLICATION

This application claims the benefit of U.S. Provisional Application Serial No. 60/674,924 filed on April 26, 2005, the contents of which are incorporated by reference herein.

### Background of the Invention

### Field of the Invention

The present invention is related to a system and method for establishing a new type of conference (e.g., collaboration) between a leader and one or more participants.

### Description of Related Art

Today it is very common especially in a business setting for people to take part in a conference call where they all communicate together within the context of a single call. The most common conference call is an audio conference, but there are also audio-video conferences, as well as data conferences, where people typically share data that is created by computer applications or operating systems in real time. In addition, there are conferences where one person (and possibly more people) is the "leader" and other people are the "participants". The leader(s) typically controls in some fashion the mixture of media in the conference, for example, by choosing to share a particular multi-media presentation or other multi-page file with the participants. The leader(s) may even mute and/or un-mute selected participant(s) when they share the particular multi-media presentation or other multi-page file. Even though these conferences all work relatively well, these conferences are at present almost exclusively used in business settings, and are neither suitable nor used in consumer applications. And yet, as circles of family, friends, and social acquaintances become more dispersed, it is desirable to develop and implement new types of conferences that enable a group of people to communicate and exchange data in ways which are useful and natural to them. This need is satisfied by the present invention.

### BRIEF DESCRIPTION OF the Invention

A system and method are described herein that can be used to establish a new type of conference (e.g., collaboration) between a leader and one or more participants. In one embodiment, the leader downloads media (e.g., digital photos) from a consumer appliance device (e.g., digital camera) into a network connected device (e.g., personal computer). Then, the leader uploads the media from the network connected device via the Internet (for example) into a television network. The television network then broadcasts the media to participants who can view/listen to the media on their televisions. In addition, the leader may allow participant(s) to view/listen to the media on their personal computer(s). Moreover, the leader may allow participant(s) to view/listen to the media on their video-enabled phone(s). The leader and the participant(s) may even establish an audio call with one another via a telephone network so they can all talk while they are viewing/listening to the media.

### BRIEF DESCRIPTION OF THE DRAWINGS

A more complete understanding of the present invention may be obtained by reference to the following detailed description when taken in conjunction with the accompanying drawings wherein:
- FIGURE 1: is a block diagram that illustrates a system that can be used to establish a conference (e.g., collaboration) between a leader and one or more participants in accordance with the present invention;
- FIGURE 2: is a flowchart that illustrates the basic steps of a method for establishing a conference (e.g., collaboration) between a leader and one or more participants in accordance with the present invention; and
- FIGURE 3: is a block diagram of a system that is used to help explain an exemplary scenario in which a leader establishes a conference so they can distribute digital pictures to participant(s) in accordance with the present invention;
- FIGURE 4: is a block diagram of a system that is used to help explain another exemplary scenario in which a leader establishes a conference so they can distribute a digital video/audio stream (e.g., a micro television station) to participant(s) in accordance with the present invention.

### DETAILED DESCRIPTION OF THE DRAWINGS

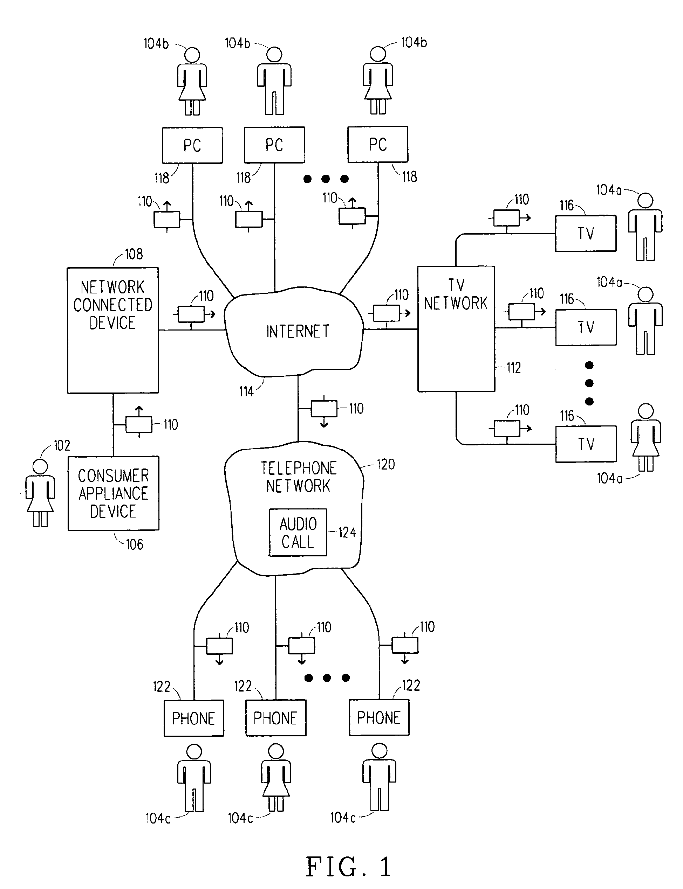

Referring to FIGURES 1-2, there are respectively illustrated a diagram of a system 100 and a flowchart of a method 200 that can be used by a leader 102 to establish a conference (e.g., collaboration) with one or more participants 104a, 104b and/or 104c in accordance with the present invention. Basically, the leader 102 connects a consumer appliance device 106 (e.g., digital camera 106, digital video camera 106, MP3 player 106) to a network connected device 108 (e.g., personal computer 108) (see step 202). Next, the leader 102 uploads media 110 (e.g., digital photos 110, digital music 110, micro-television show 110) from the consumer appliance device 106 into the network connected device 108 and into a television network 112 via an Internet 114 (step 204). The leader 102 then allows one or more participants 104a to access the media 110 on their televisions 115 which receive the media 100 via the television network 112 (step 206). In addition, the leader 102 may allow one or more participants 104b to access the media 110 on their personal computers 118 which receive the media 110 via the Internet 114 (step 208). Moreover, the leader 102 may allow one or more participant(s) 104c to access the media 110 on their video-enabled phones 122 which receive the media 110 via a telephone network 120 (step 210). Of course, steps 206, 208 and 210 do not need to be performed in any particular sequence. Instead, each of these steps 206, 208 or 210 can be performed independently from the other two steps 206, 208 and 210. Optionally, the leader 102 and/or the participant(s) 104a, 104b and/or 104c may establish an audio call 124 so they can talk with one another via the telephone network 120 while they are listening/viewing the media 110 on their television(s) 116, personal computer(s) 118 and/or video-enabled phone(s) 122 (step 212).

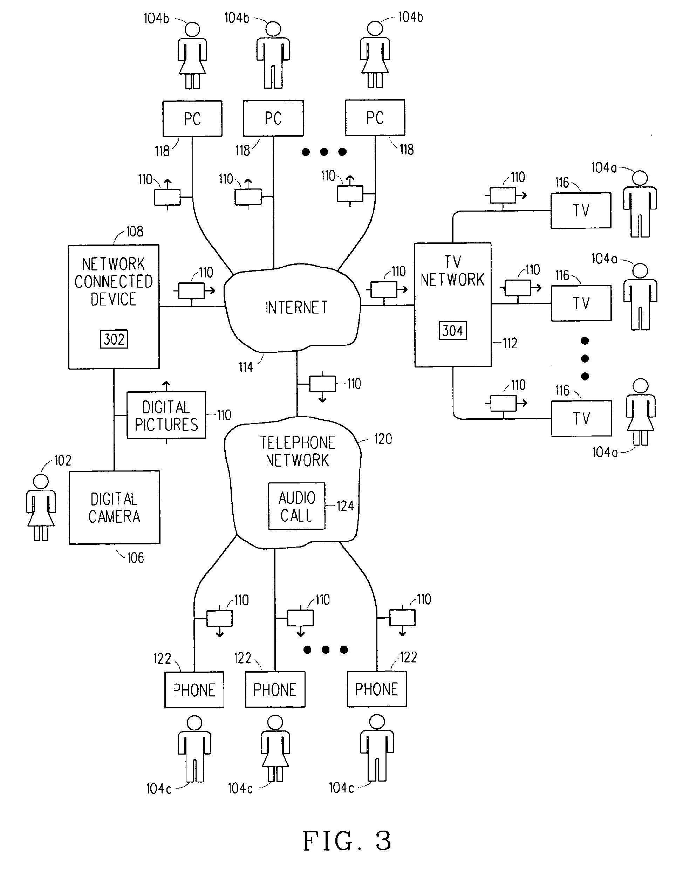

Referring to FIGURE 3, there is a block diagram of system 100 that is used to help explain an exemplary scenario in which a leader 102 establishes a conference so they can distribute digital pictures 110 to participant(s) 104a, 104b and/or 104c in accordance with the present invention. In this scenario, the leader 102 (e.g., end-user 102) connects his/her digital camera 106 to the network connected device 108 (e.g., desktop computer 108, mobile computer 108). Next, the leader 102 uploads digital pictures 110 from the digital camera 106 into some special purpose-application 302 (e.g., third-party program 302, operating system 302) located within the network connected device 108. The special purpose-application 302 (which can be an unmodified web browser) could let the end-user 102 edit/revise the digital pictures 110. Then, the special purpose-application 302 takes the digital pictures 110 (possibly the edited digital pictures 110) and uploads them via the Internet 114 (for example) to some kind of storage 304 (e.g., server 304, memory-based storage 304, disk-based storage 304) located within the infrastructure of the television network 112. For instance, the television network 112 can have different kinds of storage devices 304 for the purpose of being able 'replay' TV programs. It could be possible to utilize these 'replay' storage devices 304 so they can receive and store the uploaded digital pictures 110. In fact, it is even possible that the digital camera 106 could upload the digital pictures 110 directly into one of these 'replay' storage devices 304.

At this point, the user 102 can give information (e.g., password such as a channel and access code) to participants 104a (e.g., friends, family, acquaintances) so that they can join together in a "conference" to look at the digital pictures 110 on their televisions 116. In addition, the user 102 can give information (e.g., password such as a uniform resource locator (URL)) to participant(s) 104b (e.g., friends, family, acquaintances) so that they can join the "conference" to look at the digital pictures 110 on their personal computers 118. In this case, the digital pictures 110 would be sent from the network connected device 108 to the personal computer(s) 118 via the Internet 114. Moreover, the user 102 can give information (e.g., phone number/access code) to participant(s) 104c (e.g., friends, family, acquaintances) so that they can join the "conference" to look at the digital pictures 110 on their video-enabled phone(s) 122. In this case, the digital pictures 110 would be sent from the network connected device 108 to the video-enabled phone(s) 122 via the Internet 114 and the telephone network 120. There is nothing special about the digital pictures 110 except that they can be viewed on television(s) 116, personal computer(s) 118 and/or video-enabled phone(s) 122. In fact, any type of media 110 that can be viewed/listened to on television(s) 116, personal computer(s) 118 and/or video-enabled phone(s) 122 can benefit from being "shared" in this way. For example, the leader 102 could share a music file 110 or a digital audio/video stream 100 with the participants 104a, 104b and/or 104c.

If desired, the leader 102 and/or the participant(s) 104a, 104b and/or 104c may establish an audio call 124 with one another via the telephone network 120 (or other telephone networks 120) so they can talk while they view the digital pictures 110. It should be appreciated that additional services and value can be created when the telephone network 120 and the television network 112 have the same network infrastructure or the same network owner. Then, it is possible to enhance the user experience by having the entire "conference" appear as a seamless whole to the end-users 102, 104a, 104b and/or 104c. For instance, if video-enabled cell-phones 122 where used then it would be possible to establish a mobile media sharing conference as well as mobile audio conference call 124. Of course, this feature requires more complicated signaling to associate the various streams (e.g., telephone, television) into a unified session.

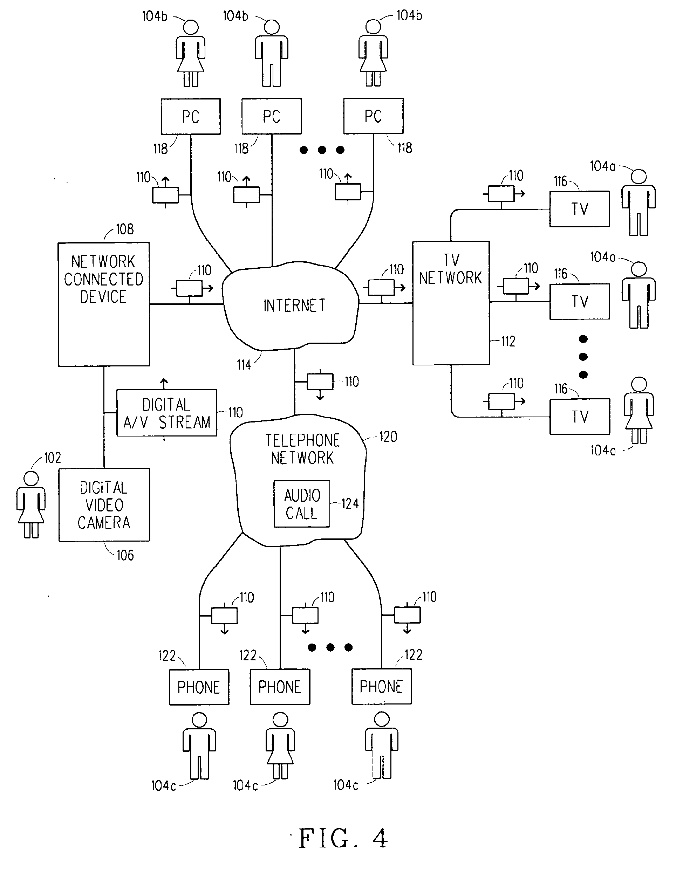

Referring to FIGURE 4, there is a block diagram of the system 100 that is used to help explain another exemplary scenario in which a leader 102 establishes a conference so they can distribute a digital audio/video stream 110 (e.g., a micro television station 110) to participant(s) 104a, 104b and/or 104c in accordance with the present invention. In this scenario, a television provider would allow an end user 102 to upload a digital audio/video stream 110 (from a digital video camera 106) to a place within their television network 112. Then, a set of participant(s) 104a (typically a set that is much smaller than that which would watch an ordinary TV program) would be allowed to access and watch the digital audio/video stream 110. The participant(s) 104a could watch the digital audio/video stream 110 in real-time or with a delay (as required by the service definition and requirements). In one implementation, an extended family might wish to create their own "reality" television show 110 that is suitable for viewing by only the family members 104a. The family members 104a could be separated geographically but as long as they all have access to a television 116 that is served by the television network 112 (or some other connected television network 112) then they could all watch the reality television show 110. If desired, the "reality" television show 110 can be uploaded securely to the television network 112 via a data connection such as the Internet 114.

As in the previous scenario, the user 102 can give information (e.g., password such as a channel and access code) to participants 104a (e.g., friends, family, acquaintances) so that they can join together in a "conference" to watch the digital audio/video stream 110 (e.g., "reality" television show 110) on their television(s) 116. In addition, the user 102 can give information (e.g., password such as a URL) to participant(s) 104b (e.g., friends, family, acquaintances) so that they can join the "conference" to watch the digital audio/video stream 110 on their personal computer(s) 118. In this case, the digital audio/video stream 110 would be sent from the network connected device 108 to the personal computer(s) 118 via the Internet 114. Moreover, the user 102 can give information (e.g., phone number/access code) to participant(s) 104c (e.g., friends, family, acquaintances) so that they can join the "conference" to watch the digital audio/video stream 110 on their video-enabled phone(s) 122. In this case, the digital pictures 110 would be sent from the network connected device 108 to the video-enabled phone(s) 122 via the Internet 114 and the telephone network 120. Furthermore, the leader 102 and/or participant(s) 104a, 104b and/or 104c may establish an audio call 124 with one another via the telephone network 120 (or other telephone networks 120) so they can talk together while they watch the audio/video stream 110.

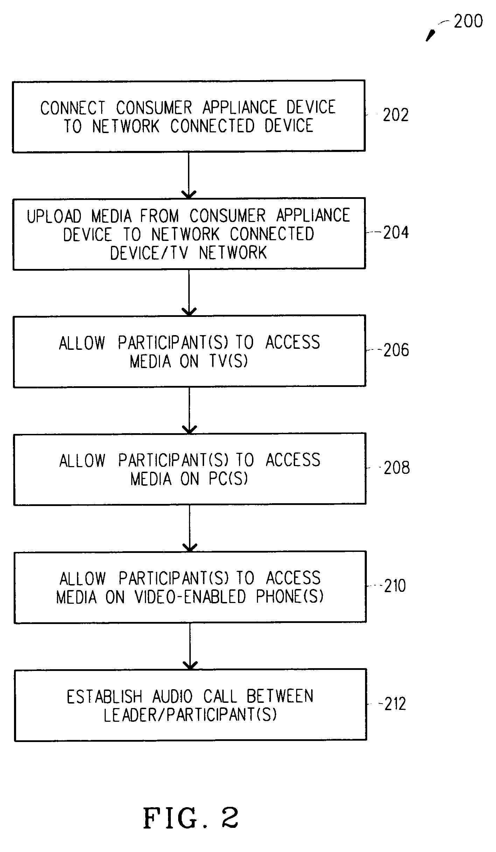

From the foregoing, those skilled in the art will appreciate that the present invention is associated with enabling a leader 102 to upload media 110 from a consumer appliance device 106 into an end-user system 108 (e.g., network connected device 108). And, then enabling the leader 102 to share the media 110 (in real-time if desired) with one or more participants 104a, 104b and/or 104c. The participant(s) 104a, 104b and 104c can receive the media 110 via the following end-user systems: television(s) 116, personal computer(s) 118 and video-enabled phone(s) 122 (see FIGURES 1-4). Those skilled in the art will also appreciate that the present invention is associated with enabling a television network 112 (e.g., cable-based or digital subscriber line (DSL)-based television network 112) perhaps (but not necessarily) leveraged together with a telephone network 120 (e.g., legacy or voice of internet protocol (VoIP) based telephone network 120) to enable people 104a to be able to receive media 110 (e.g., digital pictures 110, reality TV show 110) on their televisions 116. In addition, the present invention has several other distinguishing features, alternatives and advantages some of which are discussed next:
A. The media 110 which is being shared does not need to have its origin in a desktop, computer program or operating system, but rather it can have its origin in a consumer appliance device 106 such as a digital camera or MP3 player.
B. The participants 104a, 104b and 104c (and potentially the leader 102) can display and view the media 110 (e.g., real-time media 110) on their ordinary television set(s) 116, personal computer(s) 118 and video-enabled phone(s) 122.
C. The present invention enables ordinary consumers to derive a benefit and value from being able to share media 110 between themselves.
D. The leader 102 does not necessarily need to connect their consumer appliance device 106 to the network connected device 108 (see step 202). Instead, the leader 102 can use the network connected device 108 (and browser) to find some pictures/video files on the Internet (for example) which they can then share with the participants 104a, 104b and/or 104c. As such, step 202 shown in FIGURE 2 can be considered optional. Alternatively, the consumer appliance device 106 like a digital video camera 106 (which contains an integrated Ethernet interface) could be considered to be the network connected device 108.
E. The TV network 112, the Internet 114 and/or the telephone network 120 (shown in FIGURES 1 and 3-4) may overlap partially or wholly with one another depending on a particular implementation. For example, the TV network 112, the Internet 114 and the telephone network 120 may all be part of a triple play network.

It should be appreciated that there are many scenarios in addition to the two described herein that can be implemented with the present invention. And, it should be appreciated that certain details associated with components like the consumer appliance device 106, the television 116, the video-enabled phone 122 etc... are well known in the industry and as such those details have not been discussed herein.

The following features, separately or in any combination, may also constitute advantageous embodiments of the described or claimed invention:
- The claimed and/or described method, wherein said uploading step further includes the step of storing the media within said network connected device;
- The claimed and/or described method, wherein said uploading step further includes the step of storing the media within said television network;
- The claimed and/or described method, wherein said consumer appliance device happens to be the network connected device;
- The claimed and/or described method, further comprising the step of requiring said at least one participant to submit a password/access code;
- A method for enabling a leader to establish a conference with at least one participant, said method comprising the steps of: enabling said leader to download media from a consumer appliance device into an end-user system; enabling said leader to share the media with said at least one participant, wherein each participant can receive the media via anyone of the following end-user systems: a television set; a personal computer; or a video-enabled phone;
- The claimed and/or described method, wherein said media is shared in real-time with said at least one participant;
- The claimed and/or described method, wherein said consumer appliance device is: a digital camera; a digital video camera; or a MP3 player;
- The claimed and/or described method, wherein said media includes: digital photos; digital music; or a micro-television show;
- A method for enabling a leader to establish a conference with at least one participant, said method comprising the steps of: uploading media from a remote consumer device into a television network; and allowing said at least one participant to access the media on their television which receives the media from said television network;
- The claimed and/or described method, wherein said remote consumer device is: a consumer appliance device; or a network connected device.

Although one embodiment of the present invention has been illustrated in the accompanying Drawings and described in the foregoing Detailed Description, it should be understood that the invention is not limited to the embodiment disclosed, but is capable of numerous rearrangements, modifications and substitutions without departing from the spirit of the invention as set forth and defined by the following claims.

## Claims

1. Method for enabling a leader to establish a conference with at least one participant, said method comprising the steps of:
connecting a consumer appliance device to a network connected device;
uploading media from said consumer appliance device into a television network via said network connected device; and
allowing said at least one participant to access the media on their television which receives the media from said television network.

2. The method of Claim 1, further comprising the step of allowing said at least one participant to access the media on their personal computer which receives the media via an Internet.

3. The method of Claim 1, further comprising the step of allowing said at least one participant to access the media on their video-enabled phone which receives the media via a telephone network.

4. The method of Claim 1, further comprising the step of allowing said leader and said at least one participant to establish an audio call with one another via a telephone network.

5. The method of Claim 1, wherein said uploading step further includes the step of enabling said leader to edit/revise the media.

6. The method of Claim 1, wherein said allowing step further includes the step of giving a password/access code to said at least one participant.

7. The method of Claim 1, wherein said consumer appliance device is:
a digital camera;
a digital video camera; or
a MP3 player.

8. The method of Claim 1, wherein said media includes:
digital photos;
digital music; or
a micro-television show.

9. A method for enabling a television network to establish a conference between a leader and at least one participant, said method comprising the steps of:
receiving media that was downloaded by the leader from a consumer appliance device; and
broadcasting the media to said at least one participant such that the media is displayed on at least one television set.

10. The method of Claim 9, wherein said consumer appliance device is:
a digital camera;
a digital video camera; or
a MP3 player.

11. The method of Claim 9, wherein said media includes:
digital photos;
digital music; or
a micro-television show.

12. A television network, comprising:
a device that receives media downloaded from a remote consumer device and then broadcasts the media to one or more television sets.

13. The television network of Claim 12, wherein said remote consumer device is:
a consumer appliance device; or
a network connected device.

14. The television network of Claim 13, wherein said consumer appliance device is:
a digital camera;
a digital video camera; or
a MP3 player.
